(19) Europäisches Patentamt
European Patent Office
Office européen des brevets

(11) **EP 3 503 726 B1**

(12) **EUROPEAN PATENT SPECIFICATION**

(45) Date of publication and mention of the grant of the patent:
**11.12.2024 Bulletin 2024/50**

(21) Application number: **17780964.7**

(22) Date of filing: **26.09.2017**

(51) International Patent Classification (IPC):
***A01N 25/30*** *(2006.01)* ***A01N 25/34*** *(2006.01)*
***A01N 33/12*** *(2006.01)* ***C11D 1/62*** *(2006.01)*
***C11D 1/90*** *(2006.01)* ***C11D 3/37*** *(2006.01)*
***C11D 3/48*** *(2006.01)* ***A01P 1/00*** *(2006.01)*

(52) Cooperative Patent Classification (CPC):
**A01N 25/30; A01N 25/34; A01N 33/12; C11D 1/90; C11D 3/48; C11D 17/049**

(86) International application number:
**PCT/US2017/053389**

(87) International publication number:
**WO 2018/064021 (05.04.2018 Gazette 2018/14)**

(54) **LOW RESIDUE DISINFECTING WIPES**

RÜCKSTANDSARME DESINFIZIERENDE WISCHTÜCHER

LINGETTES DÉSINFECTANTES À FAIBLE TENEUR EN RÉSIDUS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2016 US 201662400663 P**

(43) Date of publication of application:
**03.07.2019 Bulletin 2019/27**

(73) Proprietor: **Arxada, LLC**
**Morristown, NJ 07960 (US)**

(72) Inventor: **JIANG, Xiao**
**Morristown, NJ 07960 (US)**

(74) Representative: **Michalski Hüttermann & Partner Patentanwälte mbB**
**Kaistraße 16A**
**40221 Düsseldorf (DE)**

(56) References cited:
**EP-A1- 0 548 796**
**EP-B1- 0 842 251**
**EP-B1- 0 898 611**
**US-A- 6 121 224**
**US-A1- 2002 039 979**
**US-A1- 2003 100 465**
**US-A1- 2008 010 772**
**US-A1- 2011 117 032**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND

Pathogenic organisms, such as bacteria, fungi, and viruses, continue to cause infections in humans as well as domestic animals and pets. In recent years, there has been a particular growing concern over food-borne pathogens and the potential for them to contaminate the food chain. Disinfectant formulations have been developed over the last several decades to reduce or destroy pathogenic organisms and accordingly, reduce the rate of infection. Literally any hard surface including floors, walls, countertops, windows, windowsills, sinks, faucets, waste containers, appliances, and cabinet surfaces can become contaminated. Disinfectants have been developed to treat hard surfaces for use in hospitals, rest homes, schools, and homes. Antimicrobial compositions for decontamination, disinfection and/or sanitization can be added to wipes in order to treat such surfaces.

One particular class of antimicrobial compositions includes quaternary ammonium compounds, also known as "quats", as a microbial control agent. The use of quats as biocides is well known.

In hard surface cleaning/disinfecting wipe applications, a desired product should exhibit good cleaning and disinfecting performance and at the same time leave the surface visually clean of spots, streaks, and films. Most cationic formulations, such as quat-based wipe disinfectant formulations, leave significant residues that are particularly noticeable on smooth glossy surfaces.

In one application, the antimicrobial composition may be incorporated into a wiping product and packaged as a premoistened wipe. These products are generally inexpensive to manufacture, are easy to use, and are disposable after use. Problems with streaking and film residue, however, are exacerbated when using premoistened wipes in that the products leave the surfaces in a wet state and are not dry wiped.

There have been attempts to create compositions which leave minimal residue. For example, a $C_8$ to $C_{10}$ alkylpolyglucoside (APG) surfactant and an amine oxide surfactant have been used in an attempt to produce a low residue wipe.

The known low streaking surfactant compounds can reduce streaking but tend to exhibit filming on the hard surface after application, especially when the hard surface is exposed to higher humidity conditions.

US 6 121 224 A discloses microemulsion compositions containing a mixture of at least one nonionic surfactant, an organic acid, a cationic surfactant and an amphoteric surfactant, a hydrocarbon ingredient, natural disinfectant ingredients, a water soluble solvent, a pH buffer and water.

US 2002/039979 A1 relates to a toilet bowl or glass cleaning composition containing a surfactant, a disinfecting agent, a polymeric viscosity modifier and water.

EP 0 898 611 A1 discloses aqueous liquid cleaning compositions, the compositions being free of anionic surfactants and comprising: (a) linear alcohol ethoxylate; (b) amine oxide or betaine; and other, optional components, such as a cationic ammonium compound.

EP 0 548 796 A1 relates to the use of a microbicidal agent as preservative and/or disinfectant for industrial products and industrial plants containing a polymeric quaternary ammonium borate.

US 2008/010772 A1 discloses cleaning compositions containing C8-C10 alkylpolyglucosides, have low filming and streaking when combined with C2-C4 alcohols and propylene glycol ethers.

US 2003/100465 A1 discloses a cleaning composition including a cationic biocide that includes biguanide compounds and/or quats.

US 2011/117032 A1 discloses sanitising compositions comprising (a) biocidal component comprising one or more non-polymeric biguanides and analogs thereof, and one or more quaternary ammonium compounds and a formulation comprising (b) one or more cationic detergents having at least one unsubstituted alkyl group of 8 or more carbon atoms, (c) one or more chelating agents, and (d) an amine component comprising a mixture of at least one alkanolamine and at least one bis(aminoalkyl)alkylamine.

The present disclosure is directed to a wiping composition and/or to premoistened wipes containing a wiping composition that reduces streaking and film formation after application of the composition to an adjacent surface. More particularly, the present disclosure is directed to a wiping composition containing a quaternary ammonium cation that produces reduced visible residues after use, even when applied to a smooth glossy surface.

## SUMMARY

In general, the present disclosure is directed to a wiping composition having antimicrobial properties. The wiping composition contains a quaternary ammonium cation in combination with a residue reducing surfactant. The residue reducing surfactant is present in an amount sufficient to reduce streaking and/or film formation. The residue reducing surfactant comprises a betaine surfactant. The antimicrobial agent comprising the quaternary ammonium cation is present in the wiping composition in relation to the residue reducing surfactant at a weight ratio of from about 1:0.9 to

about 1:3.

Specifically, the present invention pertains to a wiping composition for disinfecting surfaces with reduced streaking, the wiping composition comprising an aqueous solution containing

an antimicrobial agent and
a residue reducing surfactant,
wherein the antimicrobial agent is a halide salt or a carbonate/bicarbonate salt of a quaternary ammonium cation selected from the group consisting of an alkyl dimethyl benzyl ammonium, a dialkyl dimethyl ammonium, an alkyl dimethyl ethyl benzyl ammonium, and mixtures thereof,
wherein the residue reducing surfactant

a) has the following formula:

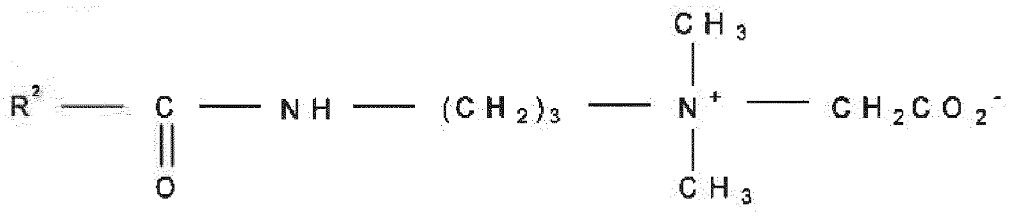

wherein R2 comprises an alkyl group having up to 20 carbon atoms; or
b) is selected from the group consisting of decyl betaine, myristyl betaine, palmityl betaine, lauryl betaine, cetyl betaine, stearyl betaine, coco dimethyl carboxymethyl betaine ("cocobetaine"), cocoamidoethyl betaine, cocoamidopropyl betaine, lauramidopropyl betaine, myristyl amidopropyl betaine, lauryl dimethyl carboxymethyl betaine, lauryl dimethyl alpha-carboxy-ethyl betaine, cetyl dimethylcarboxymethyl betaine, lauryl bis-(2-hydroxyethyl) carboxy methyl betaine, stearyl bis-(2-hydroxy-propyl) carboxymethylbetaine, oleyl dimethyl gamma-carboxypropyl betaine, lauryl bis-(2-hydroxypropyl) alpha-carboxyethyl betaine, cocoamidopropyl dimethyl betaine, and mixtures thereof; or
c) is a polymeric betaine having the following formula:

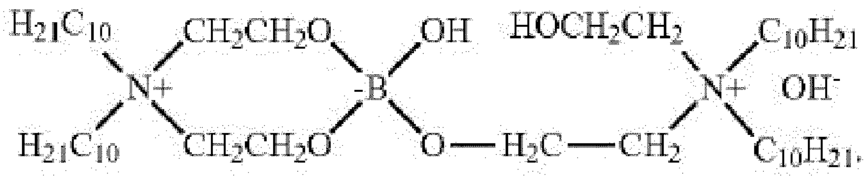

,

and

wherein the antimicrobial agent is present in the wiping composition in relation to the residue reducing surfactant at a weight ratio of from about 1:0.9 to about 1:3, and
wherein the wiping composition has a pH of greater than about 8; and
wherein the composition is free of alkyl polyglycoside (APG) and amine oxide surfactants.

For instance, the quaternary ammonium cation may comprise a halide salt of a quaternary ammonium cation. Particular examples of quaternary ammonium cations include an alkyl dimethyl benzyl ammonium chloride, a dialkyl dimethyl ammonium chloride, an alkyl dimethyl ethyl benzyl ammonium chloride, or mixtures thereof.

In an alternative embodiment, the quaternary ammonium cation can comprise a carbonate/bicarbonate salt of a quaternary ammonium cation.

In one embodiment, the betaine surfactant may have the following formula:

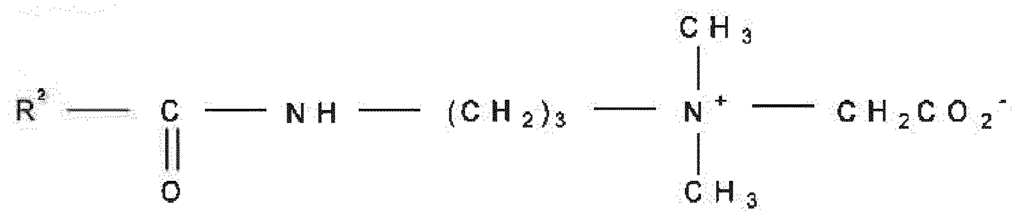

wherein $R^2$ comprises an alkyl group having up to 20 carbon atoms.

The betaine surfactant may comprise a cocoamidopropyl betaine. Other betaine surfactants that may be used in the composition include decyl betaine, myristyl betaine, palmityl betaine, lauryl betaine, cetyl betaine, stearyl betaine, coco dimethyl carboxymethyl betaine("cocobetaine"), cocoamidoethyl betaine, cocoamidopropyl betaine, lauramidopropyl betaine, myristyl amidopropyl betaine, lauryl dimethyl carboxymethyl betaine, lauryl dimethyl alpha-carboxy-ethyl betaine, cetyl dimethylcarboxymethyl betaine, lauryl bis-(2-hydroxy-ethyl) carboxy methyl betaine, stearyl bis-(2-hydroxypropyl) carboxymethylbetaine, oleyl dimethyl gamma-carboxypropyl betaine, lauryl bis-(2-hydroxypropyl) alpha-carboxyethyl betaine, cocoamidopropyl dimethyl betaine, or mixtures thereof.

In one embodiment, the residue reducing surfactant may comprise a polymeric betaine. The polymeric betaine may have the following formula:

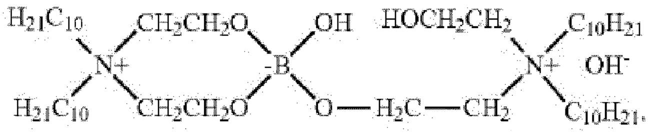

In addition to an antimicrobial agent and a residue reducing surfactant, the wiping composition generally contains at least one solvent, such as water. For instance, water can be present in an amount greater than about 90% by weight, such as in an amount greater than about 95% by weight. In one embodiment, the only solvent present within the composition comprises water. Alternatively, water may be present in combination with an organic solvent, such as an alcohol or a glycol ether.

The composition may also contain various other components such as a chelating agent, a pH builder, an organic solvent, or the like. In one particular embodiment, the composition contains a chelating agent and a pH builder. The pH builder comprises a silicate. The composition can further contain at least one nonionic surfactant. The nonionic surfactant may comprise an ethoxylated alcohol. The antimicrobial agent may be present in the aqueous solution in an amount less than about 2% by weight, such as in an amount less than about 1% by weight. The residue reducing surfactant can also be present in the aqueous solution in an amount less than about 2% by weight, such as in an amount less than about 1% by weight.

In one embodiment, the present disclosure is directed to a premoistened wiping product containing the wiping composition described above. The premoistened wiping product may comprise a liquid absorbent substrate impregnated with the wiping composition. The liquid absorbent substrate may comprise a melt blown web, a coform web, a spunbond web, an airlaid web, and airlaced web, a hydroentangled web, a bonded carded web, or a laminate thereof.

Other features and aspects of the present disclosure are discussed in greater detail below.

## DETAILED DESCRIPTION

It is to be understood by one of ordinary skill in the art that the present discussion is a description of exemplary embodiments only, and is not intended as limiting the broader aspects of the present disclosure.

A low residue antimicrobial composition is generally disclosed. The antimicrobial composition may be used to impregnate a cleaning wipe. The composition contains a quaternary ammonium antimicrobial agent and a residue reducing surfactant. The present inventors discovered novel surfactant compounds that can reduce visible residues (film and streaking) significantly on hard surfaces when used with quat-based disinfectant formulations. The use of the residue reducing surfactant compounds in accordance with the present disclosure can outperform known low residue surfactant compounds such as alkyl polyglucosides (APG) and amine oxides.

As mentioned, the composition comprises a quaternary ammonium antimicrobial compound. The quaternary ammonium compound is a quaternary ammonium salt, such as a halide salt or a carbonate/bicarbonate salt. The composition further comprises a residue reducing surfactant. The residue reducing surfactant comprises a betaine surfactant. In one embodiment, the residue reducing surfactant may comprise a polymeric betaine surfactant. The composition may

further contain additional ingredients, including solvents, surfactants, PH builders, chelators, builder salts, dyes, fragrances and the like that are commonly used in the art in cleaning and disinfecting solutions.

Quaternary ammonium compounds, also known as "quats", typically comprise at least one quaternary ammonium cation with an appropriate anion. Quats will generally have the general formula (1).

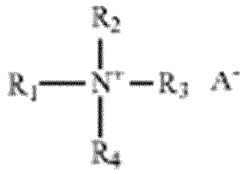

(1)

The groups $R_1$, $R_2$, $R_3$ and $R_4$ can vary within wide limits and examples of quaternary ammonium compounds that have anti-microbial properties will be well known to the person of ordinary skill in the art. Typically, two of $R_1$, $R_2$, $R_3$ and $R_4$ are lower alkyl, meaning having 1 to 4 carbon atoms, such as methyl, ethyl, propyl or butyl groups. In addition, two of $R_1$, $R_2$, $R_3$ and $R_4$ are longer chain alkyl groups of 6 to 24 carbon atoms, or a benzyl group. $A^-$ is a monovalent anion or one equivalent of a polyvalent anion of an inorganic or organic acid. Suitable anions for $A^-$ are in principle all inorganic or organic anions, in particular halides, for example chloride or bromide, carbonates, bicarbonates, carboxylates, sulfonates, phosphates or a mixture thereof. Carboxylates may be derived from lower carboxylic acids or from fatty acids.

Alkyl, hereinafter, is taken to mean in each case unbranched or branched alkyl groups of the specified number of carbons, but preferably unbranched alkyl groups, and particularly preferably those having an even number of carbon atoms. In particular, this is also taken to mean the homologue mixtures derived from natural raw materials, for example "cocoalkyl".

The quaternary ammonium compound may have the following R groups: $R_1$ is benzyl or $C_{6-18}$ alkyl, $R_2$ is $C_{1-18}$ alkyl or $-[(CH_2)_2-O]_nR_5$ where n=1-20, $R_3$ and $R_4$ independently of one another are $C_{1-4}$ alkyl, $R_5$ is hydrogen or unsubstituted or substituted phenyl, and $A^-$ is a monovalent anion or one equivalent of a polyvalent anion of an inorganic or organic acid.

Substituted phenyl is taken to mean, in particular, phenyl groups substituted with one or more Ci-is alkyl groups and/or halogen atoms.

Exemplary quaternary ammonium compounds include alkyldimethylbenzyl ammonium chlorides, dialkylmethylbenzyl ammonium chlorides, dialkyldimethylammonium chlorides, alkyl dimethyl ethylbenzyl quaternary ammonium chlorides, benzethonium chloride and any combination of any of the foregoing.

In one embodiment, the quaternary ammonium compound may comprise a dimethyl dialkyl ammonium compound. In one embodiment, the dimethyl dialkyl ammonium compound may have between about 8 and about 12 carbon atoms, such as from about 8 to about 10 carbon atoms in each of the alkyl groups.

Examples of dimethyl dialkyl ammonium compounds include dimethyl dioctyl ammonium compounds such as dimethyl dioctyl ammonium chloride, dimethyl didecyl ammonium compounds such as dimethyl didecyl ammonium chloride and the like. Mixtures of dimethyl dialkyl ammonium compounds may also be used, and other anions, such as those described above, may also be used. Commercially available dimethyl dialkyl ammonium compounds include, for example, compositions marketed and sold under the BARDAC,® BARQUAT® or CARBOQUAT® trade names by Lonza Inc.

Such commercially available examples of dimethyl dialkyl ammonium compounds include dioctyldimethylammonium chloride (available as Bardac® LF and LF-80 from Lonza, Inc.), octyldecyldimethylammonium chloride (available as a mixture of octyldecyldimethylammonium chloride, dioctyldimethylammonium chloride, and didecyldimethyl ammonium chloride as Bardac® 2050 and 2080 from Lonza, Inc.), didecyldimethylammonium chloride (available as Bardac® 2250 and 2280 from Lonza, Inc.), decylisononyldimethylammonium chloride (available as Bardac® 21 from Lonza, Inc.), diisodecyldimethylammonium chloride (available as BTC 99 from Stepan Co. of Northfield, Ill.), and any combination of any of the foregoing.

In an alternative embodiment, the quaternary ammonium compound may comprise an alkyl dimethyl benzyl ammonium compound. In general, the alkyl group may contain from about 10 to about 18 carbon atoms, such as from about 12 to about 16 carbon atoms.

Examples of alkyl dimethyl benzyl ammonium compounds useable as the first biocide include $C_{12}$ alkyl dimethyl benzyl ammonium chloride, $C_{14}$ alkyl dimethyl benzyl ammonium chloride, and $C_{16}$ alkyl dimethyl benzyl ammonium chloride. In addition, a mixture of these alkyl dimethyl benzyl ammonium compounds can be used. Commercially available alkyl dimethyl benzyl ammonium compounds include, for example, compositions marketed and sold under the BARQUAT® trade name by Lonza Inc. These commercially available alkyl dimethyl benzyl ammonium compounds are

blends of $C_{12}$, $C_{14}$, and $C_{16}$ alkyl dimethyl benzyl ammonium chlorides. Generally, it is preferable that the alkyl dimethyl benzyl ammonium compound, when a blend, contains higher concentrations of $C_{12}$ alkyl and $C_{14}$ alkyl components than $C_{16}$ alkyl components. It is noted that other anions, including those mentioned above may also be used.

Non-limiting examples of alkyldimethylbenzyl ammonium chlorides include alkyl ($C_{14}$ 50%; $C_{12}$ 40%, $C_{16}$ 10%) dimethylbenzyl ammonium chloride (available as Barquat® MB-50 and MB-80 from Lonza Inc.), alkyl ($C_{14}$ 60%; $C_{16}$ 30%; $C_{12}$ 5%. $C_{18}$ 5%) dimethylbenzyl ammonium chloride (available as Barquat® 4280Z from Lonza, Inc.), ($C_{12}$-$C_{18}$ alkyl) dimethylbenzyl ammonium chloride, and any combination of any of the foregoing.

In still another embodiment, the antimicrobial agent may comprise a quaternary ammonium carbonate. A quaternary ammonium carbonate can be represented by the following formula:

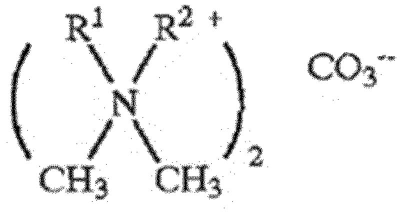

wherein R1 is a C1-C20 alkyl or aryl-substituted alkyl group and R2 is a C8-C20 alkyl group, and preferably wherein R1 is the same as R2 and R1 is a C8-C12 alkyl group, as well as compositions further comprising the corresponding quaternary ammonium bicarbonate

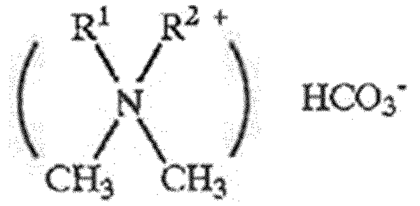

wherein R1 is the same or a different C1-C20 alkyl or aryl-substituted alkyl group as above and R2 is the same or a different C8-C20 alkyl group as above, but preferably wherein R1 is the same as R2 and R1 is a C8-C12 alkyl group.

In one embodiment, the ammonium quaternary compound contained in the composition comprises a di C8-C12 alkyl ammonium carbonate/bicarbonate. For example, in one particular embodiment, the antimicrobial agent comprises didecyl dimethyl ammonium carbonate and didecyl dimethyl ammonium bicarbonate.

Exemplary carbonate/bicarbonate salts of quaternary ammonium cations are dioctyldimethylammonium carbonate, decyloctyldimethylammonium carbonate, benzalkonium carbonate, benzethonium carbonate, stearalkonium carbonate, cetrimonium carbonate, behentrimonium carbonate, dioctyldimethylammonium bicarbonate, decyloctyldimethylammonium bicarbonate, benzalkonium bicarbonate, benzethonium bicarbonate, stearalkonium bicarbonate, cetrimonium bicarbonate, behentrimonium bicarbonate, and mixtures of one or more such carbonate salts.

It should be understood that the quaternary ammonium compound may comprise more than one specific quaternary ammonium species and may comprise a combination of any of the above described quaternary ammonium compounds.

The quaternary ammonium compound may be present in the composition in an amount of from about 0.1% to about 25% by weight based on the total weight of the antimicrobial composition. Preferably, the quaternary ammonium compound is present in the composition in an amount of from about 0.25% to about 20% by weight. The concentration of the quaternary ammonium compound in the composition in a ready to use (RTU) form which may be applied to a wipe substrate is preferably from about 0.1% to about 3%, such as from about 0.2% to about 2% based on weight of the RTU composition. In a concentrated composition, the quaternary ammonium compound can be present in the composition in an amount of from about 5% to about 40% by weight, such as from about 10% to about 20% based on weight of the concentrated composition.

In addition to the antimicrobial agent, the wiping composition of the present disclosure also contains a residue reducing surfactant. Exemplary residue reducing surfactant are an amphoteric surfactant or a zwitterionic surfactant. The residue reducing surfactant according to the invention comprises a betaine surfactant. A betaine surfactant (not according to the invention) may comprise betaines and sulfobetaines of the formula (2)

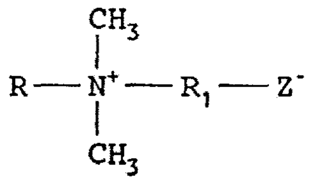

(2)

wherein R is alkyl or (3)

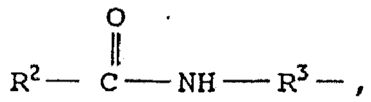

(3)

$Z^-$ is $COO^-$ or $SO_3^-$, $R_1$ is alkyl or hydroalkyl, $R_2$ is alkyl of up to about 20 carbon atoms, preferably about 6 to about 16 carbon atoms, and $R_3$ is alkyl.

In one embodiment, the betaine surfactant may have the following formula:

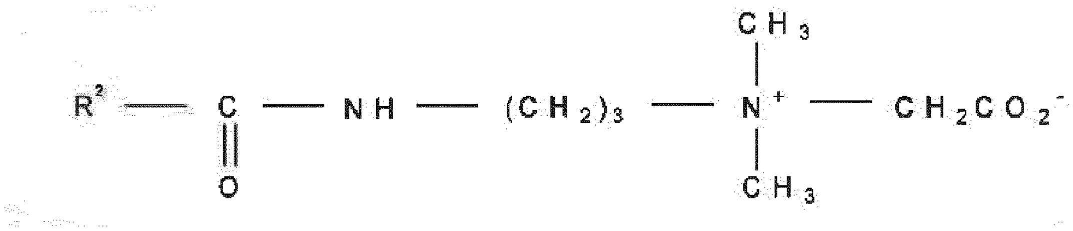

Wherein $R^2$ comprises an alkyl group having up to about 20 carbon atoms, such as from about 6 carbon atoms to about 16 carbon atoms.

Examples of betaines useful herein include decyl betaine or 2-(N-decyl-N,N-dimethylammonio) acetate, myristyl betaine, palmityl betaine, lauryl betaine, cetyl betaine, stearyl betaine, coco dimethyl carboxymethyl betaine("cocobetaine"), cocoamidoethyl betaine, cocoamidopropyl betaine, lauramidopropyl betaine, myristyl amidopropyl betaine, lauryl dimethyl carboxymethyl betaine, lauryl dimethyl alpha-carboxy-ethyl betaine, cetyl dimethylcarboxymethyl betaine, lauryl bis-(2-hydroxy-ethyl) carboxy methyl betaine, stearyl bis-(2-hydroxy-propyl) carboxymethylbetaine, oleyl dimethyl gamma-carboxypropyl betaine, lauryl bis-(2-hydroxypropyl) alpha-carboxyethyl betaine, cocoamidopropyl dimethyl betaine, and mixtures thereof and the like.

Particular examples of betaine surfactants include cocobetaine sold by Witco Chemical Corporation under the name EMCOL CC 37-18 and cocoamidopropyl betaine sold by Lonza Inc. under the name LONZAINE CO.

Examples of sulfobetaine surfactants (not according to the invention) include 3 -(N,N-dimethyl-N-acylamidopropylammonio)-2-hydroxy-propane-1 -sulfonates, wherein the acyl group is derived from tallow fatty alcohol or coconut fatty alcohol, with coconut fatty alcohol preferred. It will be recognized by those skilled in the art that, in the normal preparation of these derivatives of tallow or coconut fatty alcohols, a mixture of sulfobetaines with varying carbon chain lengths for the acyl groups will result. These fatty alcohols contain, for the most part, carbon chain lengths that will provide acyl groups with the desired number of carbon atoms, i.e., from about 8 to about 18 carbon atoms. Thus, these mixtures obtained from tallow or coconut fatty alcohols are useful in providing the sulfobetaine surfactant for reagents of the present disclosure. A material of this type is N-cocoamidopropyl-N,N-dimethyl-N-2-hydroxypropyl sulfobetaine. An example of this is LONZAINE CS, which is commercially available from Lonza, Inc.

Sulfobetaines may be represented by coco dimethyl sulfopropyl betaine, stearyl dimethyl sulfopropyl betaine, lauryl dimethyl sulfoethyl betaine, lauryl bis-(2-hydroxy-ethyl) sulfopropyl betaine and the like; amido betaines and amidosulfobetaines, wherein an RCONH(CH2)x radical is attached to the nitrogen atoms of the betaine can also be useful.

The betaine may also comprise a betaine polymer, such as an amphiphilic betaine polymer. The polymeric betaine, for instance, may comprise a complex of a dialkyl disalkoxylated quaternary ammonium salt with boric acid. Other similar compounds may also include quaternary amine salts formed by the protonation of monoalkylamines, dialkylamines, trialkylamines and monobisalkoxylated amines. In one particular embodiment, the polymeric betaine may comprise didecyl bis(hydroxyethyl) ammonium borate. The polymeric betaine may have the following formula:

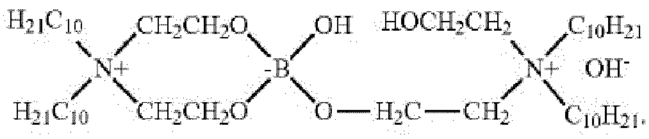

The wiping composition of the present disclosure may contain a single betaine as described above or a combination of betaines. In one embodiment, for instance, a betaine according to formulas 2 and 3 above may be combined with a polymeric betaine.

The betaine may be present in the antimicrobial composition in an amount from about 0.05% about 30% by weight based on the weight of the composition. In a RTU composition, the betaine is preferably present in an amount from about 0.2% to about 5%, such as from about 0.3% to about 3%, and particularly from about 0.5% to about 1.0% based on weight of the RTU composition. In one embodiment, the residue reducing surfactant is present in the composition in an amount less than about 2% by weight, such as in an amount less than about 1.5% by weight. In a concentrated composition, the betaine is preferably present in an amount from about 10% to about 30%, such as from about 15% to about 25% based on weight of the concentrated composition.

The betaine can be present in an amount greater than the amount of quaternary ammonium compound present. The antimicrobial agent is present in the composition in relation to the residue reducing surfactant such that the weight ratio between the antimicrobial agent and the residue reducing surfactant is from about 1:0.9 to about 1:3.

It has been found that the presence of a betaine surfactant does not impact the efficacy of the quat-based antimicrobial composition.

In addition to the antimicrobial agent and the residue reducing surfactant, the wiping composition of the present disclosure can contain various other components and ingredients. For instance, the composition may contain a pH builder, a chelating agent, other surfactants, a solvent in addition to water such as an organic solvent, a building salt, fragrances, preservatives, and the like. Each of the above described additives can be present alone or in combination with other additives.

For instance, the antimicrobial composition may also contain a pH builder. Suitable pH builders include sodium hydroxide, potassium hydroxide, potassium carbonate, sodium citrate, sodium carbonate, silicates such as sodium metasilicate, and other similar compounds. Preferred is sodium metasilicate pentahydrate.

It has also been discovered that alkanolamines are effective in raising the pH of the composition without adversely affecting the function of the quaternary ammonium compounds. Essentially any alkanolamine may be used, including mono, di and tri alkanolamines. One particularly useful alkanolamine is monoethanolamine.

The pH builder is preferably present in the composition in an amount from about 0.01% to about 2%, such as from about 0.02% to about 1%, based on weight of the composition. The wiping composition has a pH of greater than about 8, such as greater than about 9, such as greater than about 10. The pH is generally less than about 14, such as less than about 12. In one particular embodiment, for instance, the wiping composition can have a pH of from about 10 to about 12. The pH builder can be added in an amount sufficient for the composition to have a pH within the above range.

The composition may also contain a chelating agent. Suitable chelating agents include, but are not limited to, ethylene diamine tetra acetic acid (EDTA) and salts thereof (e.g., tetrasodium EDTA available as Versene 100® from Dow Europe S.A. of Horgen, Switzerland), nitrilotriacetic acid (NTA), and diammonium ethylene diamine tetraacetate. The ability of NTA and EDTA to remove metal ions facilitates of the solution by preventing hardness (calcium) precipitation. The chelating agent may also serve to bind other metal ions that may adversely affect the effectiveness of the disinfecting components in the composition.

The chelating agent is preferably present in the composition in an amount of from about 0.01% to about 10%, such as from about 0.04% to about 6% based on weight of the composition.

Nonionic surfactants can also be included in the composition in addition to the residue reducing surfactant. A nonionic surfactant, in one embodiment, can be broadly defined as compounds produced by the condensation of a hydrophilic alkylene oxide group with an aliphatic or alkyl aromatic hydrophobic compound. Examples of preferred classes of nonionic surfactants are:

Long chain tertiary amine oxides corresponding to the following general formula:

$$R_1R_2R_3N \rightarrow O$$

wherein $R_1$ contains an alkyl, alkenyl or monohydroxy alkyl radical of from about 8 to about 18 carbon atoms, up to about 10 ethylene oxide moieties, and up to 1 glyceryl moiety, and $R_2$ and $R_3$ contain from 1 to about 3 carbon atoms and up to about 1 hydroxy group, e.g., methyl, ethyl, propyl, hydroxyethyl, or hydroxypropyl radicals. Examples of amine oxides suitable for use in this invention include: dimethyldodecylamine oxide, oleyldi(2-hydroxyethyl)amine oxide, dimethyloctylamine oxide, dimethyldecylamine oxide, dimethyltetradecylamine oxide, di(2-hydroxyethyl)tetradecylamine oxide, 3-dodecoxy-2-hydroxypropyldi(3-hydroxypropyl)amine oxide, and dimethylhexadecylamine oxide.

The polyethylene oxide condensates of alkyl phenols, e.g., the condensation products of alkyl phenols having an alkyl group containing from about 6 to 12 carbon atoms in either a straight chain or branched chain configuration, with ethylene oxide, the said ethylene oxide being present in amounts equal to 6 to 60 moles of ethylene oxide per mole of alkyl phenol. The alkyl substituent in such compounds may be derived from polymerized propylene, diisobutylene, octane, or nonane.

Those derived from the condensation of ethylene oxide with the product resulting from the reaction of propylene oxide and ethylene diamine products which may be varied in composition depending upon the balance between the hydrophobic and hydrophilic elements which is desired. For example, compounds containing from about 40% to about 80% polyoxyethylene by weight and having a molecular weight of from about 5,000 to about 11,000 resulting from the reaction of ethylene oxide groups with a hydrophobic base constituted of the reaction product of ethylene diamine and excess propylene oxide, said base having a molecular weight of the order of 2,500 to 3,000, are satisfactory.

The condensation product of straight or branched chain aliphatic alcohols having from 8 to 18 carbon atoms with ethylene oxide, e.g., a coconut alcohol ethylene oxide condensate having from 10 to 30 moles of ethylene oxide per mole of coconut alcohol, the coconut alcohol fraction having from 10 to 14 carbon atoms.

Particular surfactants that may be used in the composition are nonyl phenol ethoxylates (6-12 moles), primary alcohol ethoxylates (3-12 moles), and secondary alcohol ethoxylates (3-12 moles).

The nonionic surfactants described herein are selected to adsorb or otherwise bond to the fibers of a dry substrate of the cleaning wipe, thereby preventing the active disinfectants from being adsorbed by the fibers of the dry substrate. Without being bound by theory, it is believed that the nonionic surfactants described herein alter the relative equilibrium at the cleaning wipe surface by both modifying the surface to make it less hydrophobic and modifying the wiping composition to make it less hydrophilic. For example, in the case of a quat solution, such as a dialkyl or alkyl benzyl quat solution, the net result is a reduced attraction of the hydrophobic wiper surface for the hydrophobic hydrocarbon tails of the quat solution. The hydrophobic groups have an affinity for the fiber surface of the substrate. Unlike anionic surfactants, the nonionic nature of the surfactant does not attract the cationic quat-based or chlorine-based disinfectant solutions and prevents the active disinfectant from bonding to the substrate fibers.

Exemplary commercially available nonionic surfactants of this composition are C11-C15 secondary alkanols condensed with 7, 9, 12, 20, or 40 moles of ethylene oxide (alkyloxypolyethylene oxyethanols), produced by Dow Chemical under the tradenames Tergitol® 15-S-7, 15-S-9, 15-S-12, 15-S-20, and 15-S-40. Additional exemplary nonionic surfactants, of the same type, are marketed by Dow Chemical under the tradenames Tergitol® TMN-6 and TMN-10, believed to comprise reaction products of trimethyl-nonanol with ethylene oxide. Other exemplary nonionic surfactants are commercially available from BASF under the tradename Irgasurf® HL 560. Still other nonionic surfactants include block copolymers of polyoxyethylene and polyoxypropylene that are available under the trade name Pluronic®, marketed by BASF. A single member of any of the foregoing nonionic surfactant compositions can be used in the wiping composition, or mixtures of such exemplary nonionic surfactant materials can be employed.

The amount of the nonionic surfactant in the composition is preferably from about 0.01% to about 5% based on weight of the composition. Typically, the composition contains from about 0.05% to about 3% of nonionic surfactant. Alternatively, the composition may not include a non-ionic surfactant. Further, the composition is free of alkyl polyglycoside (APG) and amine oxide surfactants.

The antimicrobial composition of the present disclosure can be supplied as a concentrate, which is diluted to use levels prior to use. Alternatively, the disinfecting composition can be provided as a Ready-to-Use (RTU) composition. In either case, the composition contains a solvent.

Generally, the solvent will be a polar solvent such as water, or an organic solvent, such as an alcohol and/or a glycol ether. In one embodiment, the only solvent present in the composition is water. Alternatively, the composition may contain water in combination with an organic solvent.

Examples of organic solvents include ethanol, propanol, benzyl alcohol, phenoxyethanol, isopropanol, diethylene glycol propyl ether, ethylene glycol monomethyl ether, ethylene glycol monoethyl ether, ethylene glycol monopropyl ether, ethylene glycol monoisopropyl ether, ethylene glycol monobutyl ether, diethylene glycol monomethyl ether, diethylene glycol monobutyl ether, diethylene glycol monoethyl ether, diethylene glycol n-butyl ether, ethylene glycol dimethyl ether, ethylene glycol diethyl ether, ethylene glycol dibutyl ether, propylene glycol n-butyl ether, propylene glycol n-propyl ether, tripropylene glycol methyl ether, dipropylene glycol methyl ether, dipropylene glycol butyl ether, dipropylene glycol n-propyl ether, ethylene glycol hexyl ether and combinations thereof.

Water can be present in the composition generally in an amount greater than about 60% by weight, such as greater than about 70% by weight, such as greater than about 80% by weight, such as greater than about 90% by weight. For example, water can be present in the composition in an amount greater than about 92% by weight, such as in an amount greater than about 94% by weight, such as in an amount greater than about 96% by weight, such as in an amount greater than about 98% by weight. Water is generally present in an amount less than about 99.5 % by weight, such in an amount less than about 99% by weight, such in an amount less than about 95% by weight.

In one embodiment, the solvent comprises water and an additional organic solvent such as isopropanol, propylene glycol n-propyl ether, or propylene glycol n-butyl ether. When a solvent is present in addition to water, it is preferably present in an amount from about 0.1% to 20% based on weight of the composition. In a RTU concentration, the organic solvent in addition to water is preferably present in an amount from about 0.25% to about 2%, such as from about 0.3% to about 0.5% based on weight of the composition. In a concentrated composition, the additional solvent is preferably present in an amount from about 1% to about 15%, such as about 8% to about 12%, based on weight of the composition.

The wiping composition of the present disclosure may optionally further contain corrosion inhibitors, complexing agents, auxiliaries, preservatives, fragrances, colorants and the like. Exemplary corrosion inhibitors include, for example, organic phosphorous compounds and blend of organic phosphorous compounds with a polymeric component. Exemplary auxiliaries include, for example, polyethylene glycol or other similar compounds. Examples of building salts that may be used include sodium metasilicate, sodium tripolyphosphate, sodium nitrilotriacetate, sodium carbonate, sodium silicate, citric acid salts and zeolites. Colorants and fragrances may be added provided they do not interfere with the function of the composition and may serve for identifying the composition. Generally, the optional further ingredients will make up less than about 20% by weight of the composition. For example, each of the above identified ingredients or components can be present in the composition generally in an amount from about 0.01 % by weight to about 5% by weight. For instance, each of the above components can be present in the composition in an amount from about 0.1% to about 2% by weight, such as from about 0.3% to about 1% by weight. The optional additives are added in amounts conventionally used in sanitizing and disinfecting compositions.

Advantageously, it has been found that the addition of fragrance does not change the streaking and filming performance of the composition.

One particularly useful application method is to impregnate the wiping composition into a wipe substrate. In this embodiment, the wipe is a single use wipe that is impregnated with the wiping composition and is stored in a container that will dispense the wipe to a user. The container with the wipes may contain a single wipe, or several wipes. Suitable containers include a pouch containing a single wipe, such as a moist towelette which is torn open by the user, or may be a pouch with a resealable opening containing several wipes in a stacked fashion, a rolled fashion or other suitable formation that would allow a single wipe to be removed from the opening at a time. Pouches are generally prepared form a fluid impervious material, such as a film, a coated paper or foil or other similar fluid impervious materials. In another way to dispense wipes of the present disclosure is to place the wipe in to a fluid impervious container having an opening to access the wipes in the container. Containers may be molded plastic container with lids that are fluid impervious. Generally, the lid will have an opening to access the wipes in the container. The wipe in the container may be in an interleaved stack, such that as a wipe is removed from the container, the next wipe is positioned in the opening of the container ready for the user to remove the next wipe. Alternatively, the wipe may be a continuous material which is perforated between the individual wipes of the continuous material. The continuous wipe material with perforations may be in a folded form or may be in a rolled form. Usually, in the rolled form, the wipe material is fed from the center of the rolled material. As with the interleaved stack, as a wipe is removed from the container, the next wipe is positioned in the opening to facilitate removal of the next wipe, when needed.

Disposable wipes provide advantages over other application vehicles, such as a reusable sponge, rag or the like. Unlike sponges, rags and the like, which are used repeatedly, the impregnated wipe is used a single time and disposed of. Reused sponges or rags present problems since the sponges or rags may carry microbes that are not easily killed by the disinfecting composition.

The wiping composition can be impregnated into the wipe such that the wipe is pre-moistened and will express or release the wiping composition onto the surface as the wipe is run across the surface to be treated. Generally, the wiping composition is saturated into the wipe such that the wipe will release the wiping composition to the surface through the wiping action. Generally, the wiping composition is used from about 2 parts to 6 parts by weight per 1 part by weight of the wiper substrate, more preferably from about 3 to about 5 parts by weight per 1 part by weight of the wiper substrate. In these ranges, complete saturation of the substrates can be achieved. It is noted that the amount of the wiping solution may go up or down to achieve complete saturation of the wipe substrate, depending on the particular wipe substrate.

Suitable wipe substrates include woven and nonwoven materials. Essentially any nonwoven web material may be used. Exemplary nonwoven materials may include, but are not limited to meltblown, coform, spunbond, airlaid, hydroentangled nonwovens, spunlace, bonded carded webs, and laminates thereof. Optionally, the nonwoven may be laminated with a film material as well. The fibers used to prepare the wipe substrate may be cellulosic fiber, thermoplastic fibers and mixtures thereof. The fibers may also be continuous fibers, discontinuous fibers, staple fibers and mixtures thereof. Basis weights of the nonwoven web may vary from about 12 grams per square meter to 200 grams per square meter or more.

In one embodiment the wipe is impregnated with a liquid component containing both active and inert ingredients within the allowable tolerance levels and the wiping composition expressed from the wipe contains active ingredients within the allowable tolerance levels. Once applied to the surface, the antimicrobial wiping composition is allowed to

remain on the surface for a period of time. The antimicrobial composition may be applied to the surface and allowed to dry or may alternatively be dried by wiping the surface with a dry wipe or wiping device, which is preferably unused. As mentioned, it has been unexpectedly found that the described wiping composition produces less streaking and film-forming than previously known compositions when applied using a wipe, especially on glossy surfaces.

The following examples are intended to provide a more complete understanding of the present invention. The examples are not intended, however, to limit the invention.

## EXAMPLES

Quat based disinfecting samples formulated in accordance with the present disclosure were tested for streaking/filming performance and antimicrobial efficacy.

Formulation details for the disinfecting samples are provided in Table 1, 2, 3 and 4. To test streaking/filming performance, the samples were loaded onto wipe substrates with a 4.0 loading ratio. The wipe substrates were then wiped on black glass plates and allowed to dry. The black glass plates were then visually examined for filming and streaking and graded from low to medium to high.

Table 1 below provides the streaking/filming performance for samples containing various surfactants. As seen in Table 1, samples containing a betaine surfactant demonstrated lower streaking and filming than did samples containing other surfactants.

Table 1. Streaking/filming performance for quat based disinfecting samples containing surfactants alkylpolyglucoside, amine oxide, and betaine

| Components (amount in wt. %, D. I. water added to 100%) | Sample No. | | | | | | |
|---|---|---|---|---|---|---|---|
| | Ref. Sample 1 | Ref. Sample 2 | Ref. Sample 3 | Sample 4 | Sample 5 | Sample 6 | Sample 7 |
| alkyl dimethyl benzyl and dialkyl dimethyl ammonium chloride | 0.3788 | 0.3788 | 0.3788 | 0.3788 | - | 0.3788 | 0.3788 |
| alkyl dimethyl benzyl ammonium chloride/ alkyl dimethyl ethyl benzyl ammonium chloride | - | - | - | - | 0.3788 | - | - |
| sodium metasilicate pentahydrate | 0.026 | 0.026 | 0.026 | 0.026 | 0.026 | - | - |
| monoethanolamine | - | - | - | - | - | 0.026 | 0.026 |
| tetrasodium EDTA | 0.053 | 0.053 | 0.053 | 0.053 | 0.053 | 0.053 | 0.053 |
| ethoxylated alkyl (C12-14) alcohol | 0.105 | 0.105 | - | 0.105 | 0.105 | 0.105 | - |
| C8-C10 alkylpolyglucoside (APG) | - | 0.9 | - | - | - | - | - |
| cocodimethyl amine oxide | - | - | 0.9 | - | - | - | - |
| coco amido propyl dimethyl betaine | - | - | - | 0.9 | 0.9 | 0.9 | 0.9 |
| Streaking | High | Low | Medium to high | Low | Low | Low | Low |
| Filming | Medium | Medium | Medium to high | Low | Low | Low | Low |

Table 2 provides streaking/filming performance for quat based disinfecting samples containing a fragrance. As illustrated in Table 2, samples 9-12, which contained betaine and fragrance, had lower streaking and filming than did sample 9, which contained alkylpolyglucoside and fragrance.

Table 2. Streaking/filming performance for quat based disinfecting samples containing fragrance and surfactants alkylpolyglucoside and betaine

| Components (amount in wt. %, D. I. water added to 100%) | Sample No. | | | | |
|---|---|---|---|---|---|
| | Ref. Sample 8 | Sample 9 | Sample 10 | Sample 11 | Sample 12 |
| alkyl dimethyl benzyl and dialkyl dimethyl ammonium chloride | 0.3788 | 0.3788 | - | 0.3788 | 0.3788 |
| alkyl dimethyl benzyl ammonium chloride/ alkyl dimethyl ethyl benzyl ammonium chloride | - | - | 0.3788 | - | - |
| sodium metasilicate pentahydrate | 0.026 | 0.026 | 0.026 | - | - |
| monoethanolamine | - | - | - | 0.026 | 0.026 |
| tetrasodium EDTA | 0.053 | 0.053 | 0.053 | 0.053 | 0.053 |
| ethoxylated alkyl (C12-14) alcohol | 0.105 | 0.105 | 0.105 | 0.105 | - |
| C8-C10 alkylpolyglucoside | 0.9 | - | - | - | - |
| coco amido propyl dimethyl betaine | - | 0.9 | 0.9 | 0.9 | 0.9 |
| fragrance | 0.15 | 0.15 | 0.15 | 0.15 | 0.15 |
| Streaking | Low | Low | Low | Low | Low |
| Filming | Medium | Low | Low | Low | Low |

As shown in table 3, quat based disinfecting samples containing lower concentrations of betaine surfactant caused less streaking and filming than did samples containing lower concentrations of other surfactants.

Table 3. Streaking/filming performance for quat based disinfecting samples containing lower concentrations of surfactants alkylpolyglucoside and betaine

| Components (amount in wt. %, D. I. water added to 100%) | Sample No. | | | | |
|---|---|---|---|---|---|
| | Ref. Sample 13 | Sample 14 | Sample 15 | Sample 16 | Sample 17 |
| alkyl dimethyl benzyl and dialkyl dimethyl ammonium chloride | 0.3788 | 0.3788 | - | 0.3788 | 0.3788 |
| alkyl dimethyl benzyl ammonium chloride/ alkyl dimethyl ethyl benzyl ammonium chloride | - | - | 0.3788 | - | - |
| sodium metasilicate pentahydrate | 0.026 | 0.026 | 0.026 | - | - |
| monoethanolamine | - | - | - | 0.026 | 0.026 |
| tetrasodium EDTA | 0.053 | 0.053 | 0.053 | 0.053 | 0.053 |
| ethoxylated alkyl (C12-14) alcohol | 0.105 | 0.105 | 0.105 | 0.105 | - |
| C8-C10 alkylpolyglucoside | 0.55 | - | - | - | - |
| coco amido propyl dimethyl betaine | - | 0.55 | 0.55 | 0.55 | 0.55 |
| Streaking | Medium | Low | Low | Low | Low |
| Filming | Medium | Low | Low | Low | Low |

Table 4 illustrates the effect of solvents on streaking and filming of quat based disinfecting samples. As seen in Table 4, samples 18, 19, and 20 containing isopropanol, propylene glycol n-butyl ether, and propylene glycol n-propyl ether demonstrated lower streaking and film performance than did the samples containing other solvents.

Table 4. Streaking/filming performance for quat based disinfecting samples containing betaine and various solvents

| Components (amount in wt. %, D. I. water added to 100%) | Sample No. | | | | | |
|---|---|---|---|---|---|---|
| | Sample 18 | Sample 19 | Sample 20 | Sample 21 | Sample 22 | Sample 23 |
| alkyl dimethyl benzyl and dialkyl dimethyl ammonium chloride | 0.3788 | 0.3788 | 0.3788 | 0.3788 | 0.3788 | 0.3788 |
| monoethanolamine | 0.026 | 0.026 | 0.026 | 0.026 | 0.026 | 0.026 |
| tetrasodium EDTA | 0.053 | 0.053 | 0.053 | 0.053 | 0.053 | 0.053 |
| coco amido propyl dimethyl betaine | 0.55 | 0.55 | 0.55 | 0.55 | 0.55 | 0.55 |
| isopropanol | 1.0 | | | | | |
| propylene glycol n-butyl ether | | 1.0 | | | | |
| propylene glycol n-propyl ether | | | 1.0 | | | |
| diethylene glycol n-butyl ether | | | | 1.0 | | |
| dipropylene glycol n-propyl ether | | | | | 1.0 | |
| ethylene glycol hexyl ether | | | | | | 1.0 |
| Streaking | Low | Low | Low | Medium | Medium | Low to Medium |
| Filming | Low | Low | Low | Medium | Low | Low to medium |

Low residue quat/betaine based disinfecting formulations, described in Table 5, were evaluated for antimicrobial efficacy against *Staphylococcus aureus* (ATCC 6538). The testing was performed in accordance with the protocols outline in AOAC official method 961.02 Germicidal Spray products as Disinfectants, modified for use with wipes.

Cultures of *S. aureus* and sterile glass test carriers were prepared. Microbial concentrations of three carriers were enumerated prior to test initiation to determine pre-test carrier microbial concentrations. The test carriers were placed in petri dishes lined with sterile filter paper. The carriers were then inoculated with *S. aureus* by spreading the culture evenly across the surface of the carrier and allowing the culture to dry. The dry, contaminated test carrier surfaces were then sprayed, individually, with the disinfecting samples. The microbial concentrations of three test carriers were enumerated to determine post-test carrier microbial concentrations. Contaminated test surfaces were incubated in the disinfectant for a specified contact time and then transferred, individually, to sterile test tubes or jars containing a neutralization/growth media and incubated for 48 hours. After incubation, the number of tubes showing growth of the target microorganism was recorded. The formulations were then recorded as "pass" or "fail" based on the number of test surfaces demonstrating complete disinfection.

As illustrated in Table 5 below, all of the disinfecting formulations containing a betaine surfactant passed the antimicrobial efficacy test.

Table 5. Antimicrobial efficacy testing results of quat/betaine based disinfecting samples against *S. aureus*

| Components (amount in wt. %, D.I. water added to 100%) | Sample No. | | | |
|---|---|---|---|---|
| | Sample 24 | Sample 25 | Sample 26 | Sample 27 |
| alkyl dimethyl benzyl and dialkyl dimethyl ammonium chloride | 0.3788 | 0.3788 | 0.3788 | 0.3788 |
| sodium metasilicate pentahydrate | 0.026 | - | - | - |
| monoethanolamine | - | 0.026 | 0.026 | 0.026 |
| tetrasodium EDTA | 0.053 | 0.053 | 0.053 | 0.053 |
| ethoxylated alkyl (C12-14) alcohol | 0.105 | - | 0.105 | - |
| coco amido propyl dimethyl betaine | 0.9 | 0.9 | 0.55 | 0.55 |

(continued)

| Components (amount in wt. %, D.I. water added to 100%) | Sample No. | | | |
|---|---|---|---|---|
| | Sample 24 | Sample 25 | Sample 26 | Sample 27 |
| isopropanol | 0.4 | 0.4 | - | - |
| propylene glycol n-butyl ether | - | - | 0.4 | 0.4 |
| **AOAC Modified GST Antimicrobial efficacy results against *S. aureus*** | **Pass** | **Pass** | **Pass** | **Pass** |

Further examples of low residue quat/betaine based disinfecting formulations are provided in Table 6 below.

Table 6. Examples of low streaking concentrate formulations

| Components (amount in wt. %) | Sample No. | | | |
|---|---|---|---|---|
| | Sample 28 | Sample 29 | Sample 30 | Sample 31 |
| alkyl dimethyl benzyl and dialkyl dimethyl ammonium chloride (80%) | 11.87 | 15.83 | 15.83 | 15.83 |
| sodium metasilicate pentahydrate | 0.66 | -- | -- | -- |
| monoethanolamine | - | 0.88 | 0.88 | 0.88 |
| tetrasodium EDTA | 3.50 | 4.67 | 4.67 | 4.67 |
| ethoxylated alkyl (C12-14) alcohol | 2.63 | -- | -- | -- |
| coco amido propyl dimethyl betaine (37%) | 61.00 | 49.5 | 49.5 | 49.5 |
| isopropanol | 10.00 | -- | 10.0 | -- |
| propylene glycol n-butyl ether | -- | -- | -- | 10.0 |
| D.I. water | 10.34 | 29.12 | 19.12 | 19.12 |
| **Dilution rate** | **4%** | **3%** | **3%** | **3%** |

## Claims

**1.** A wiping composition for disinfecting surfaces with reduced streaking, the wiping composition comprising an aqueous solution containing

- an antimicrobial agent and
- a residue reducing surfactant,

wherein the antimicrobial agent is a halide salt or a carbonate/bicarbonate salt of a quaternary ammonium cation selected from the group consisting of an alkyl dimethyl benzyl ammonium, a dialkyl dimethyl ammonium, an alkyl dimethyl ethyl benzyl ammonium, and mixtures thereof,
wherein the residue reducing surfactant

a) has the following formula:

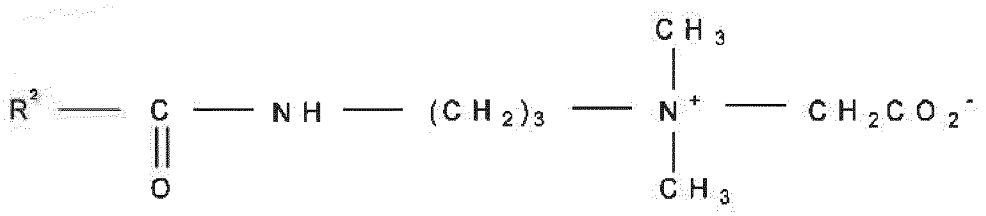

wherein R2 comprises an alkyl group having up to 20 carbon atoms; or
b) is selected from the group consisting of decyl betaine, myristyl betaine, palmityl betaine, lauryl betaine, cetyl betaine, stearyl betaine, coco dimethyl carboxymethyl betaine ("cocobetaine"), cocoamidoethyl betaine, cocoamidopropyl betaine, lauramidopropyl betaine, myristyl amidopropyl betaine, lauryl dimethyl carboxymethyl betaine, lauryl dimethyl alpha-carboxy-ethyl betaine, cetyl dimethylcarboxymethyl betaine, lauryl bis-(2-hydroxy-ethyl) carboxy methyl betaine, stearyl bis-(2-hydroxypropyl) carboxymethylbetaine, oleyl dimethyl gamma-carboxypropyl betaine, lauryl bis-(2-hydroxypropyl) alpha-carboxyethyl betaine, cocoamidopropyl dimethyl betaine, and mixtures thereof; or
c) is a polymeric betaine having the following formula:

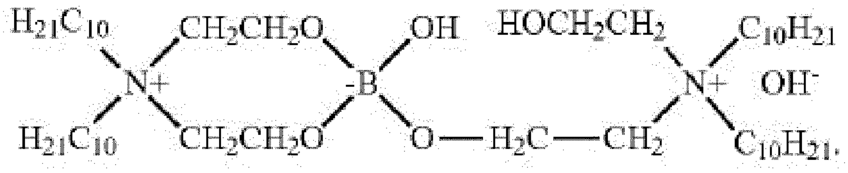

,

and

wherein the antimicrobial agent is present in the wiping composition in relation to the residue reducing surfactant at a weight ratio of from about 1:0.9 to about 1:3, and
wherein the wiping composition has a pH of greater than about 8; and
wherein the composition is free of alkyl polyglycoside (APG) and amine oxide surfactants.

**2.** A wiping composition as defined in claim 1, wherein the residue reducing surfactant comprises cocoamidopropyl betaine.

**3.** A wiping composition as defined in any of the preceding claims, where the only solvent contained in the wiping composition is water.

**4.** A wiping composition as defined in any of the preceding claims, wherein the composition further contains

a chelating agent,
a pH builder comprising a silicate or an alkanolamine,
at least one nonionic surfactant comprising an ethoxylated alcohol;
wherein the antimicrobial agent is present in the aqueous solution in an amount less than about 2% by weight, and
wherein the residue reducing surfactant is present in the aqueous solution in an amount less than about 2% by weight, and
wherein water is contained in the wiping composition in an amount greater than about 90% by weight.

**5.** A wiping composition as defined in any of the preceding claims, wherein the antimicrobial agent comprises a di C8-C12 alkyl ammonium chloride.

**6.** A wiping composition as defined in any of the preceding claims, wherein the wiping composition comprises a concentrate that is intended to be diluted prior to use, the concentrate containing the quaternary ammonium cation in an amount of from about 5% to about 40% by weight.

**7.** A premoistened wiping product comprising:

a liquid absorbent substrate; and
a wiping composition as defined in any of the preceding claims.

## Patentansprüche

**1.** Wischzusammensetzung zum Desinfizieren von Oberflächen mit verminderter Streifenbildung, wobei die Wischzusammensetzung eine wässrige Lösung enthält, die aufweist:

ein antimikrobielles Mittel; und
ein rückstandsreduzierendes Tensid,
wobei das antimikrobielle Mittel ein Halogenidsalz oder ein Carbonat/Bicarbonat-Salz eines quartären Ammoniumkations ist, das ausgewählt ist aus der Gruppe bestehend aus einem Alkyldimethylbenzylammonium, einem Dialkyldimethylammonium, einem Alkyldimethylethylbenzylammonium und Mischungen davon,
wobei das rückstandsreduzierende Tensid

a) die folgende Formel hat:

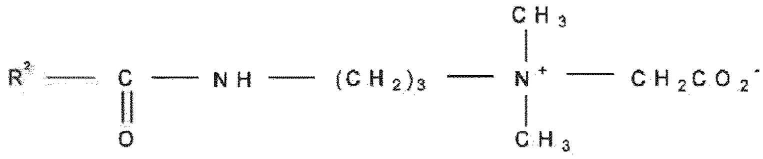

wobei R2 eine Alkylgruppe mit bis zu 20 Kohlenstoffatomen aufweist, oder
b) ausgewählt ist aus der Gruppe bestehend aus Decylbetain, Myristylbetain, Palmitylbetain, Laurylbetain, Cetylbetain, Stearylbetain, Cocodimethylcarboxymethylbetain ("Cocobetain"), Cocoamidoethylbetain, Cocoamidopropylbetain, Lauramidopropylbetain, Myristylamidopropylbetain, Lauryldimethylcarboxymethylbetain, Lauryldimethyl-alpha-carboxyethylbetain, Cetyl-dimethylcarboxymethylbetain, Lauryl-bis-(2-hydroxyethyl)carboxymethylbetain, Stearyl-bis-(2-hydroxypropyl)carboxymethylbetain, Oleyl-dimethyl-gamma-carboxypropylbetain, Lauryl-bis-(2-hydroxypropyl)alpha-carboxyethylbetain, Cocoamidopropyldimethylbetain und Mischungen davon, oder
c) ein polymeres Betain mit der folgenden Formel ist:

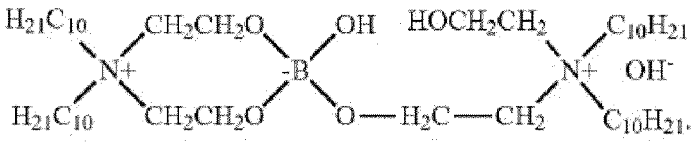
,

und

wobei das antimikrobielle Mittel in der Wischzusammensetzung in Bezug auf das rückstandsreduzierende Tensid in einem Gewichtsverhältnis von etwa 1:0,9 bis etwa 1:3 vorhanden ist, und
wobei die Wischzusammensetzung einen pH-Wert von mehr als etwa 8 aufweist, und
wobei die Zusammensetzung frei von Alkylpolyglycosid- (APC) und Aminoxid-Tensiden ist.

**2.** Wischzusammensetzung nach Anspruch 1, wobei das rückstandsreduzierende Tensid Cocoamidopropylbetain aufweist.

**3.** Wischzusammensetzung nach einem der vorhergehenden Ansprüche, wobei das einzige in der Wischzusammensetzung enthaltene Lösungsmittel Wasser ist.

**4.** Wischzusammensetzung nach einem der vorhergehenden Ansprüche, wobei die Zusammensetzung ferner aufweist:

einen Chelatbildner;
ein pH-Wert-Einstellmittel, das ein Silikat oder ein Alkanolamin enthält; und
mindestens ein nichtionisches Tensid, das einen ethoxylierten Alkohol enthält,
wobei das antimikrobielle Mittel in der wässrigen Lösung in einer Menge von weniger als etwa 2 Gew.-% vorhanden ist, und
wobei das rückstandsreduzierende Tensid in der wässrigen Lösung in einer Menge von weniger als etwa 2 Gew.-% vorhanden ist, und

wobei Wasser in der Wischzusammensetzung in einer Menge von mehr als etwa 90 Gew.-% enthalten ist.

5. Wischzusammensetzung nach einem der vorhergehenden Ansprüche, wobei das antimikrobielle Mittel ein Di-$C_8$-$C_{12}$-Alkylammoniumchlorid aufweist.

6. Wischzusammensetzung nach einem der vorhergehenden Ansprüche, wobei die Wischzusammensetzung ein Konzentrat enthält, das dazu vorgesehen ist, vor der Verwendung verdünnt zu werden, wobei das Konzentrat das quartäre Ammoniumkation in einer Menge von etwa 5 Gew.-% bis etwa 40 Gew.-% enthält.

7. Vorbefeuchtetes Wischprodukt, mit:

einem flüssigkeitsabsorbierenden Substrat; und
einer Wischzusammensetzung nach einem der vorhergehenden Ansprüche.

## Revendications

1. Composition d'essuyage pour la désinfection des surfaces avec réduction des traces, la composition d'essuyage comprenant une solution aqueuse contenant

- un agent antimicrobien et
- un tensioactif réducteur de résidus,

dans laquelle l'agent antimicrobien est un sel d'halogénure ou un sel de carbonate/bicarbonate d'un cation d'ammonium quaternaire choisi dans le groupe constitué par un alkyldiméthylbenzyl ammonium, un dialkyldiméthyl ammonium, un alkyldiméthyléthylbenzyl ammonium, et leurs mélanges,
dans laquelle le tensioactif réducteur de résidus

a) a la formule suivante :

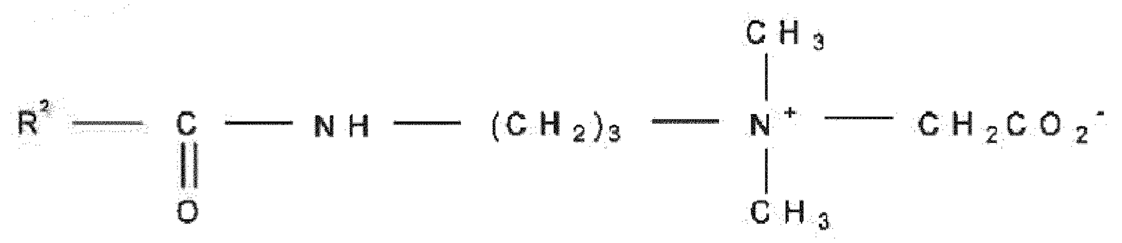

où R2 comprend un groupe alkyle ayant jusqu'à 20 atomes de carbone ; ou
b) est choisi dans le groupe constitué par la décyl bétaïne, la myristyl bétaïne, la palmityl bétaïne, la lauryl bétaïne, la cétyl bétaïne, la stéaryl bétaïne, la coco diméthyl carboxyméthyl bétaïne (« cocobétaïne »), la cocoamidoéthyl bétaïne, la cocoamidopropyl bétaïne, la lauramidopropyl bétaïne, la myristyle amidopropyl bétaïne, la lauryl diméthyl carboxyméthyl bétaïne, la lauryl diméthyl alpha-carboxy-éthyl bétaïne, la cétyl diméthylcarboxyméthyl bétaïne, la lauryl bis-(2-hydroxy-éthyl) carboxyméthyl bétaïne, la stéaryl bis-(2-hydroxypropyl) carboxyméthyl bétaïne, l'oléyl diméthyl gamma-carboxypropyl bétaïne, la lauryl bis-(2-hydroxypropyl) alpha-carboxyéthyl bétaïne, la cocoamidopropyl diméthyl bétaïne, et leurs mélanges ; ou
c) est une bétaïne polymérique ayant la formule suivante :

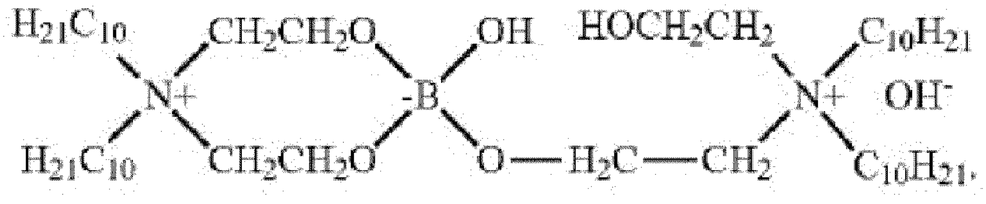

,

et

dans laquelle l'agent antimicrobien est présent dans la composition d'essuyage par rapport au tensioactif réducteur de résidus dans un rapport pondéral d'environ 1:0,9 à environ 1:3, et
dans laquelle la composition d'essuyage a un pH supérieur à environ 8 ; et
dans laquelle la composition est exempte de tensioactifs à base de polyglycoside d'alkyle (APG) et d'oxyde d'amine.

**2.** Composition d'essuyage selon la revendication 1, dans laquelle le tensioactif réducteur de résidus comprend de la cocoamidopropyl bétaïne.

**3.** Composition d'essuyage selon l'une quelconque des revendications précédentes, dans laquelle le seul solvant contenu dans la composition d'essuyage est de l'eau.

**4.** Composition d'essuyage selon l'une quelconque des revendications précédentes, dans laquelle la composition contient en outre

un agent chélatant,
un adjuvant de pH comprenant un silicate ou une alcanolamine,
au moins un tensioactif non ionique comprenant un alcool éthoxylé ;
dans laquelle l'agent antimicrobien est présent dans la solution aqueuse en une quantité inférieure à environ 2 % en poids, et
dans laquelle le tensioactif réducteur de résidus est présent dans la solution aqueuse en une quantité inférieure à environ 2 % en poids, et
dans laquelle l'eau est contenue dans la composition d'essuyage en une quantité supérieure à environ 90 % en poids.

**5.** Composition d'essuyage selon l'une quelconque des revendications précédentes, dans laquelle l'agent antimicrobien comprend un chlorure de dialkyl en C8-C12 ammonium.

**6.** Composition d'essuyage selon l'une quelconque des revendications précédentes, dans laquelle la composition d'essuyage comprend un concentré qui est destiné à être dilué avant utilisation, le concentré contenant le cation ammonium quaternaire en une quantité d'environ 5 % à environ 40 % en poids.

**7.** Produit d'essuyage préhumidifié comprenant :

un substrat absorbant liquide ; et
une composition d'essuyage selon l'une quelconque des revendications précédentes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6121224 A
- US 2002039979 A1
- EP 0898611 A1
- EP 0548796 A1
- US 2008010772 A1
- US 2003100465 A1
- US 2011117032 A1